# EUROPEAN PATENT APPLICATION

(11) **EP 2 512 161 A1**
(43) Date of publication of application: **17.10.2012**
(21) Application number: 10791509.2
(22) Date of filing: 21.06.2010
(51) Int. Cl.: H04W 4/12, H04W 4/20, H04N 7/14

(54) **METHOD, SERVICE TERMINAL AND SERVER FOR MOBILE VIDEO COMMUNICATING**

(30) Priority: 11.12.2009 CN 200910212000
(71) Applicant: ZTE Corporation, Shenzhen, Guangdong 518057 (CN)
(72) Inventor: LIU, Zhipeng, Guangdong 518057 (CN); LI, Feng, Guangdong 518057 (CN)
(74) Representative: Garratt, Peter Douglas
(86) International application number: PCT/CN2010/074149
(87) International publication number: WO 2010/149003

(57) **Abstract**

The present invention discloses a communication method for mobile video, a service side and a server, wherein the method comprises: a service side being in an initial state, the service side receiving a call from a mobile terminal, and then the service side entering into a timing refresh mode or a signaling mode. The timing refresh mode refers to that the service side sends data to the mobile terminal at intervals of a predetermined time. The signaling mode refers to that the service side sends the data to the mobile terminal in the signaling mode. The present invention improves the video communication quality of 3 G terminals.

## Description

### Field of the Invention

The present invention relates to communication field, and in particular to a communication method for mobile video, a service side and a server.

### Background of the Invention

In mobile communication, video damage caused by bit error or frame drop is a very common phenomenon, which can result in the continuance of video mosaic appearance being as long as 5-8 seconds. For the serious screen mess in the related art during the mobile video process, no effective solution has been brought forward so far.

### Summary of the Invention

The present invention is provided in view of the serious screen mess in the related art during the mobile video process. Therefore, a communication method for mobile video, a service side and a server are provided by the present invention so as to solve at least one of the problems above.

According to one aspect of the present invention, a communication method for mobile video is provided.

The communication method for mobile video according to the present invention comprises: a service side being in a initial state; the service side receiving a video call from a mobile terminal; and the service side entering into a timing refresh mode or a signaling mode; wherein, the timing refresh mode refers to that the service side sends video data to the mobile terminal at intervals of a predetermined time; and the signaling mode refers to that the service side sends the video data to the mobile terminal in the signaling mode.

Preferably, before the service side enters into the timing refresh mode, the method further comprises: the service side judging whether it is required to execute transcoding to the video data; and the service side entering into the timing refresh mode if the judgment result indicates it is required to execute transcoding.

Preferably, after the service side enters into the timing refresh mode, the method further comprises: the service side judging whether communication of mobile video is normal or not; and the service side re-coding the video data through a transcoding board if decoding of the mobile video is abnormal.

Preferably, after the service side enters into the timing refresh mode, the method further comprises: the service side returning to the initial state if the mobile terminal is shut down

Preferably, after the service side enters into the timing refresh mode or the signaling mode, the method further comprises: the service side, if a called party mobile terminal answers a call, switching from the timing refresh mode or the signaling mode to one of the following states: maintaining the signaling mode;signaling transparent transmission mode, wherein the service side only conducts signaling transparent transmission in the signaling transparent transmission mode.

Preferably, after the service side switches to the signaling transparent transmission mode from the timing refresh mode or the signaling mode, the method further comprises: the service side returning to the initial state from the signaling transparent transmission mode if the mobile terminal is hung up.

Preferably, the data are I Frames.

According to another aspect of the present invention, a service side is provided.

The service side according to the present invention comprises:.a receiving module, configured to receive a call from a mobile terminal; and a first switching module, configured to switch the service side into a timing refresh mode or a signaling mode, wherein, the timing refresh mode refers to that the service side sends data to the mobile terminal at intervals of a predetermined time; and the signaling mode refers to that the service side sends the data to the mobile terminal in the signaling mode

Preferably, the service side further comprises: a second switching module, configured to switch from the timing refresh mode or the signaling mode to the initial mod

According to another aspect of the present invention, a server is provided.

The server according to the present invention comprises any one of the service sides above.

Through the present invention, the service side is in the initial state, the service side receives the call from the mobile terminal, and then the service side enters into the timing refresh mode or the signaling mode, wherein the timing refresh mode refers to that the service side sends video data to the mobile terminal at intervals of a predetermined time and the signaling mode refers to that the service side sends video data to the mobile terminal in the signaling mode, which solves the problem of the serious screen mess during the mobile video process, and thereby the video communication quality of 3 G terminals is improved.

### Brief Description of the Drawings

The drawings illustrated herein, constituting a part of the present application, provide a further understanding the present invention. The exemplary embodiments of the present invention and the description thereof are used to explain the present invention without unduly limiting the present invention, wherein:
Fig. 1 is a schematic diagram of a communication system for mobile video according to one embodiment of the present invention;
Fig. 2 is a flow chart of a communication method for mobile video according to one embodiment of the present invention;
Fig. 3 is a flow chart of a preferred communication method for mobile video according to one embodiment of the present invention;
Fig. 4 is a flow chart of polyphonic ringtone video refresh of a calling party according to one embodiment of the present invention;
Fig. 5 is a flow chart of cross-forwarding and adaptation refresh of a called party according to one embodiment of the present invention; and
Fig. 6 is a block diagram of a service side according one embodiment of the present invention.

### Detailed Description of Embodiments

The present invention will be further illustrated hereinafter in conjunction with the drawings and the embodiments. It shall be noted that the embodiments in the present invention and the features of the embodiments can be mutually combined if there is no conflict.

A communication method of mobile video is provided according to the embodiments of the present invention.

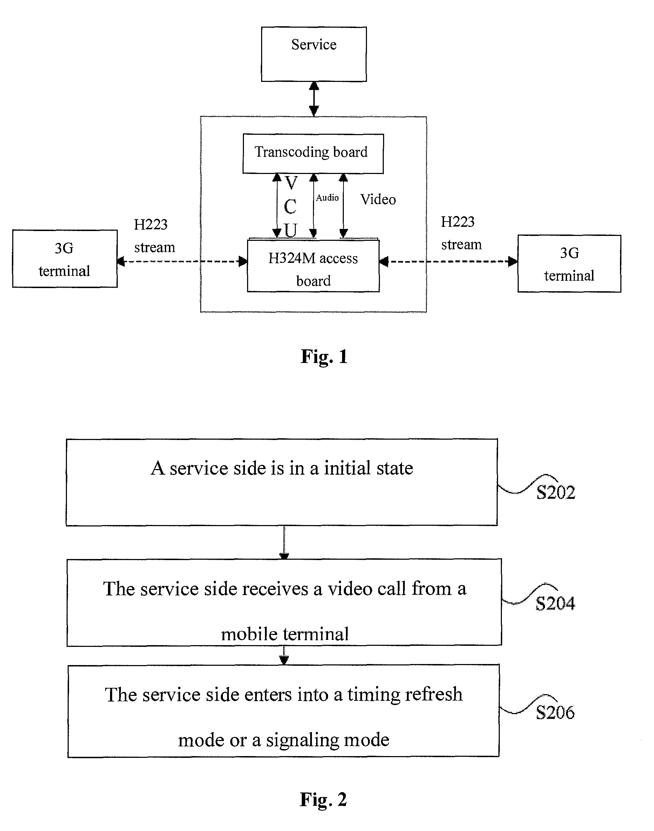

Fig. 2 is a flow chart of a communication method of mobile video according to one embodiment of the present invention.

As shown in Fig. 2, the method comprises Steps from S202 to S206.

Step S202, a service side is in an initial state.

Step S204, the service side receives a call from a mobile terminal.

Step S206, the service side enters into a timing refresh mode or a signaling mode, wherein the timing refresh mode refers to that the service side sends data to the mobile terminal at intervals of a predetermined time, and the signaling mode refers to that the service side sends data to the mobile terminal in the signaling mode.

In the embodiment, for the call processing of the mobile video communication, two states are added at the service side, under which the service side will send data to the mobile terminal actively so as to avoid problems such as the screen mess in the related art due to data transmission interruption, which is caused when the service side waits for the request of the mobile terminal passively for sending data.

The implementation of the embodiments of the present invention will be further illustrated hereinafter in conjunction with examples.

The present invention relates to the 3G multimedia technology field, and in particular to the application service of 3G mobile video. Since the packet loss on the radio link between a video gateway and a 3G terminal may cause mosaic screen mess appearance, etc. A multi-mode video fresh (VCU) sending solution is designed by the present invention to alleviate the screen mess appearance.

Fig. 1 is a schematic diagram of a communication system for mobile video according to one embodiment of the present invention.

The present invention realizes the reduction of the effects of the packet loss over the radio link on the video image quality and the improvement of the video experience of the terminal users. When packet loss happens in the wireless network, the existing treatment methods comprise: adding redundant information, and recovering the information lostvia the redundancy algorithm of a terminal. The method designs a multi-mode VCU sending solution in which the mosaic or screen mess on the terminal is alleviated by using combinations of different modes in different stages of the video interaction to send VCU requests or directly coding and sending I-frames to the 3G terminal.

As shown in Fig. 1, I-frame resending solution of multi-mode transition designed by the present invention is as follows.

### (1) the signaling transparent transmission mode

The mode is applicable to the end-to-end video function. Since each terminal can support video refresh itself, the terminal dynamically generates I-frames according to VFU signaling in the received H245 signaling, and the video server only conducts signaling transparent transmission to send the signaling of video refresh request to the other side. However, at this time, the video server needs to carry out strategic filterto the VFU signaling so as to prevent the generation of too many I-frames which may cause the congestion of the radio link and the deterioration of video effects.

### (2) the system refresh mode

The premise of the system video refresh mode is transcoding. It can be detected whether the video is damaged and video refresh can be performed by executing the transcoding firstly. Therefore, in this mode, even if the video capabilities negotiated between video polyphonic ringtone sources and the terminal are consistent, it is still required to apply for transcoding resources for transcoding and generating I-frames.

The system refresh mode comprises two modes: the signaling mode and the timing refresh mode.

In the above, the signaling mode comprises: a transcoding module of the video server detects whether the received video code streams are correct. If packet loss occurs to the video code streams and causes incorrect coding and decoding, the requests for VCU are sent to a 324M access board and sent to the video source side for dynamically requesting for I-frames.

The timing refresh mode: in this mode, a service configuration transcoding module sends one I-frame to the terminal automatically every once in a while, and no coding VFU signaling is required. Time interval range that can be configured is 1-10S, and the default configuration time of the system is set according to practical experience.

The technical solution of the present invention will be further illustrated hereinafter in conjunction with the drawings and the examples:

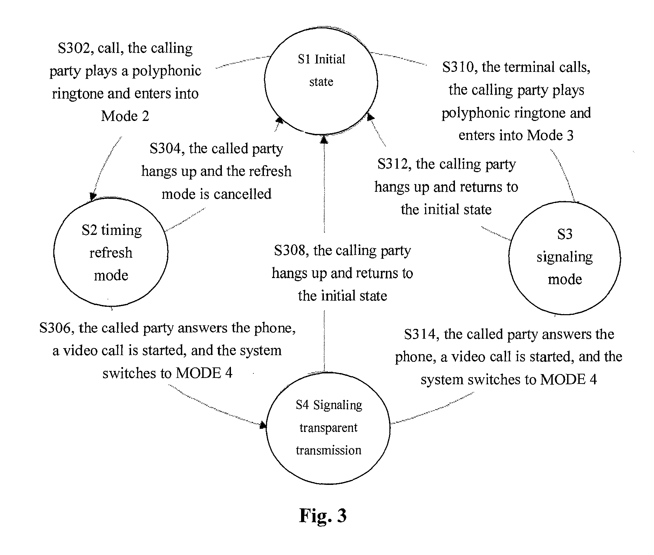

Fig. 3 is a flow chart of a preferred communication method for the mobile video according to one embodiment of the present invention;

As shown in Fig. 3, the method comprises the steps as follows.

Step S1, after the system is started up, the initial state is S1 and no refresh mode is set.

Step S302, when a calling party terminal calls a called party, if the service is set as the timing refresh mode, the signaling opens the media channel of the calling party. When the calling party plays a polyphonic ringtone or starts to record the video images acquired by the terminal, the system will switch from the initial state S1 to a state S2 (the system timing refresh mode), and encode the I-frames at regular intervals and send them to each terminal.

Step S304, if at this time, the calling party hangs up and the polyphonic ringtone stops displaying, then the system will switch from the state S2 to the state S1.

Step S306, in the state S2, if the called party answers the phone, cross-forwarding is started. At this time, the called media channel is opened, and the calling party starts a video call with the called party. At this time, the system switches from the state S2 to a state S4, and enters into the signaling transparent transmission mode. Then the video server will filter VCUs among the terminals according to strategies and forward the VCUs.

Step S308, if at this time, the called party or the calling party hangs up, the system will switch from the state S4 to the initial state.

Step S310, in the state S1, if the called party answers the phone, a video call is started. If the service is set as the signaling mode of the system refresh, the system will switch from the state S1 to the state S3. At this time, the transcoding board of the system will generate VCU commands according to the I-frame damage situation detected and send the VCU commands to the phone terminal making the response.

Step S312, if at this time, the calling party hangs up and the polyphonic ringtone stops displaying, then the system will switch from the state S3 to the state S1.

Step S314, in the state S3, if the called party answers the phone, the cross-forwarding is started. At this time, the called media channel is opened, and the calling party starts a video call with the called party. At this time, the system switches from the state S3 to the state S4, and enters into the signaling transparent transmission mode. Then the video server will filter VCUs among the terminals according to strategies and forward the VCUs.

Step S4, the step is the same as Step 308, if at this time, the called party or the calling party hangs up, the system will switch from the state S4 to the initial state.

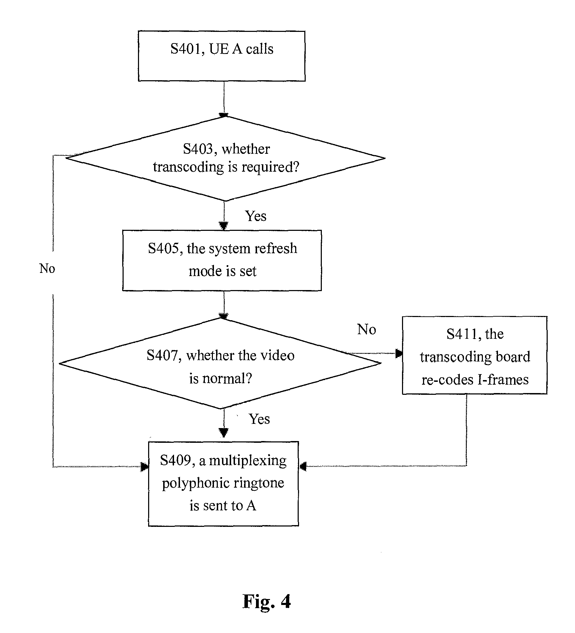

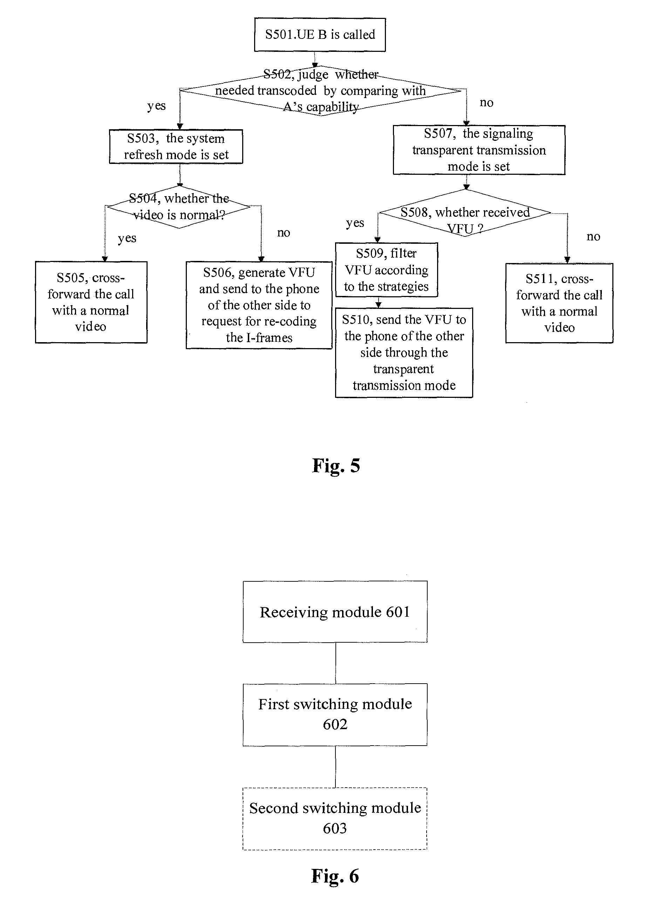

The transition of the refresh mode is described by Fig. 3, and the processing flow is as shown in Fig. 4 and Fig. 5.

Fig. 4 is a flow chart of polyphonic ringtone video refresh of a calling party according to one embodiment of the present invention.

As shown in Fig. 4, the method comprises the steps as follows.

Step S401, the calling party terminal UE A calls the called party, and no refresh mode is set.

Step S403, when the calling party terminal calls the called party, it is judged whether the system requires mode switching. Preferably, it is judged whether it is necessary to switch from the initial state to the system timing refresh mode. If it is necessary to switch, enter Step S405; and if not, enter Step S409.

Step S405, at this time, the system refresh mode is set. Preferably, when the calling party terminal calls the called party, if the service is set as the timing refresh mode, the signaling opens the media channel of the calling party, and then the system will switch from the initial mode to the system timing refresh mode.

Step S407, it is judged whether the video between the calling party and the called party is normal. If normal, turn to Step S409; and if abnormal, turn to Step S411.

Step S409, a multiplexing polyphonic ringtone is sent to the calling party terminal A. Preferably, the calling party plays the polyphonic ringtone or starts to record the video images acquired by the terminal.

Step S411, the transcoding board re-codes the I-frames. Preferably, at this time the transcoding board of the system generates VCU commands according to the detected I-frame damage situation and sends the VCU commands to the phone terminal making the response.

Fig. 5 is a flow chart of the cross-forwarding and adaptation refresh of a called party according to one embodiment of the present invention.

As shown in Fig. 5, the method comprises the steps as follows.

Step S501, the calling party terminal calls the called party terminal UE B, and no refresh mode is set.

Step S502, it is judged whether mode switching is required by comparing the capabilities of the calling party terminal and the capabilities of the called terminal. If the switching is required, enter Step S503; and if not, turn to Step S507.

Step S503, the system refresh mode is set.

Step S504, it is judged whether the video is normal. If normal, enter Step S505; and if abnormal, turn to Step S506.

Step S505, the call is switched directly, without transcoding.

Step S506, the VFU signaling is generated and sent to the phone of the other side to request for re-coding the I-frames.

Step S507, signaling transparent transmission mode is set.

Step S508, it is judged whether the VFU signaling is received. If the signaling is received, enter Step S509; and if not, turn to Step S511.

Step S509, the VFU is filtered according to the strategies.

Step S510, the VFU is sent to the phone of the other side through the transparent transmission mode.

Step S511, the call is switched directly, without transcoding.

From the description above, it can be known that the solution provided by the present invention can improve the video quality of the 3G terminal significantly in the multimedia polyphonic ringtone system and eliminate the screen mess of the terminal. In addition, the logical structure of the solution is clear and simple, and easy for software realization.

A service side is provided according to the embodiments of the present invention.

Fig. 6 is a block diagram of the service side according the embodiment of the present invention.

As shown in Fig. 6, the service side comprises: a receiving module 601 and a first switching module 602.

In the above, the receiving module 601 is configured to receive a call from a mobile terminal; and the first switching module 602 is configured to switch to a timing refresh mode or a signaling mode, wherein the timing refresh mode refers to that the service side sends data to the mobile terminal at intervals of a predetermined time and the signaling mode refers to that the service side sends data to the mobile terminal in the signaling mode.

Preferably, the service side further comprises a second switching module 603.

The second switching module 603 is configured to switch from the timing refresh mode or the signaling mode to the initial mode.

The embodiment of the present invention provides a server, which has any one of the service sides above.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively or a plurality of modules or steps thereof are made into one integrated circuit module. In this way, the present invention is not restricted to any particular hardware and software combination.

The descriptions above are just the preferred embodiments of the present invention, and are not used to limit the present invention. For those skilled in the art, the present invention can have various alterations and changes. Any change, equivalent substitution and improvement etc. within the spirit and principle of the present invention are all included in the protection scope of the present invention.

## Claims

1. A communication method for mobile video, **characterized by** comprising:
a service side being in a initial state;
the service side receiving a video call from a mobile terminal; and
the service side entering into a timing refresh mode or a signaling mode; wherein,
the timing refresh mode refers to that the service side sends video data to the mobile terminal at intervals of a predetermined time; and
the signaling mode refers to that the service side sends the video data to the mobile terminal in the signaling mode.

2. The method according to Claim 1, **characterized in that**, before the service side enters into the timing refresh mode, the method further comprises:
the service side judging whether it is required to execute transcoding to the video data; and
the service side entering into the timing refresh mode if the judgment result indicates it is required to execute transcoding.

3. The method according to Claim 2, **characterized in that**, after the service side enters into the timing refresh mode, the method further comprises:
the service side judging whether communication of mobile video is normal or not; and
the service side re-coding the video data through a transcoding board if decoding of the mobile video is abnormal.

4. The method according to Claim 1, **characterized in that**, after the service side enters into the timing refresh mode, the method further comprises:
the service side returning to the initial state if the mobile terminal is shut down

5. The method according to Claim 1, **characterized in that**, after the service side enters into the timing refresh mode or the signaling mode, the method further comprises:
the service side, if a called party mobile terminal answers a call, switching from the timing refresh mode or the signaling mode to one of the following states:
maintaining the signaling mode;
signaling transparent transmission mode, wherein the service side only conducts signaling transparent transmission in the signaling transparent transmission mode.

6. The method according to Claim 5, **characterized in that**, after the service side switches to the signaling transparent transmission mode from the timing refresh mode or the signaling mode, the method further comprises:
the service side returning to the initial state from the signaling transparent transmission mode if the mobile terminal is hung up.

7. The method according to any one of Claims 1 to 6, **characterized in that**, the data are I Frames.

8. A service side, **characterized by** comprising:
a receiving module, configured to receive a call from a mobile terminal; and
a first switching module, configured to switch the service side into a timing refresh mode or a signaling mode, wherein,
the timing refresh mode refers to that the service side sends data to the mobile terminal at intervals of a predetermined time; and
the signaling mode refers to that the service side sends the data to the mobile terminal in the signaling mode.

9. The service side according to Claim 8, **characterized in that** the service side further comprises:
a second switching module, configured to switch from the timing refresh mode or the signaling mode to the initial mode.

10. A server, **characterized by** comprising the service side as claimed in Claim 8 or 9.
